(19) Europäisches Patentamt / European Patent Office / Office européen des brevets

(11) **EP 3 894 899 B1**

(12) **EUROPEAN PATENT SPECIFICATION**

(45) Date of publication and mention
of the grant of the patent:
**12.02.2025 Bulletin 2025/07**

(21) Application number: **19809490.6**

(22) Date of filing: **29.11.2019**

(51) International Patent Classification (IPC):
**G01S 19/54** (2010.01)

(52) Cooperative Patent Classification (CPC):
**G01S 19/54**

(86) International application number:
**PCT/EP2019/083137**

(87) International publication number:
**WO 2020/120177 (18.06.2020 Gazette 2020/25)**

(54) **A METHOD FOR ESTIMATING THE ATTITUDE OF A VEHICLE**

VERFAHREN ZUR SCHÄTZUNG DER LAGE EINES FAHRZEUGS

PROCÉDÉ D'ESTIMATION DE LA POSITION D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2018 PCT/EP2018/084590**

(43) Date of publication of application:
**20.10.2021 Bulletin 2021/42**

(73) Proprietor: **VOLVO TRUCK CORPORATION
405 08 Göteborg (SE)**

(72) Inventor: **VALTERSSON, Edvin
433 70 SÄVEDALEN (SE)**

(74) Representative: **Kransell & Wennborg KB
P.O. Box 2096
403 12 Göteborg (SE)**

(56) References cited:
**EP-A1- 3 190 430     US-B1- 6 256 583**

• **PARIKH NIRAV ET AL: "Implementation of a
Least Mean Square Approach for a Low-Cost
Short Baseline Attitude Determination", GNSS
2007 - PROCEEDINGS OF THE 20TH
INTERNATIONAL TECHNICAL MEETING OF THE
SATELLITE DIVISION OF THE INSTITUTE OF
NAVIGATION (ION GNSS 2007), THE INSTITUTE
OF NAVIGATION, 8551 RIXLEW LANE SUITE 360
MANASSAS, VA 20109, USA, 28 September 2007
(2007-09-28), pages 818 - 826, XP056010162**

**Description**

TECHNICAL FIELD

The invention relates to a method for estimating the attitude of a vehicle by using a global navigation satellite system.

The invention can be applied in heavy-duty vehicles, such as trucks, buses and construction equipment. Although the invention will be described with respect to a truck, the invention is not restricted to this particular vehicle, but may also be used in other vehicles such as motorcars.

BACKGROUND

Contemporary vehicle positioning solutions are using a global navigation satellite system (GNSS) in order to obtain heading information about said vehicle. However, the heading information is usually only provided when said vehicle is moving.

Moreover, global navigation satellite system information is usually combined with information of at least one inertial measurement unit (IMU) or other vehicle data to increase the availability of said heading information. This, however, is only possible when said vehicle has first been moving. Furthermore, this also suffers from sensor calibration issues where inaccurately calibrated sensors will cause said information to drift, i.e. become inaccurate.

Moreover, there is also an issue with the global navigation satellite system providing said heading information of the antenna (which is not the same as the attitude, e.g. the direction, of said vehicle).

One option to solve the above mentioned problems is to combine the global navigation satellite system heading information, inertial measurement unit data, vehicle speed and wheel base (and thereby the slip angle) to calculate the attitude of said vehicle instead of the antenna heading. However, this is challenging since it is hard to estimate the effective wheel base of a vehicle, in particular a truck, with dynamic geometries and properties, such as liftable rear axles, different load conditions etc.

J. Pinchin et al., "Precise Kinematic Positioning Using Single Frequency GPS Receivers and an Integer Ambiguity Constraint", Proceedings of IEEE/ION PLANS 2008, pages 600-605 (XP056006728) discloses a system for baseline-constrained GNSS attitude measurement.

N. Parikh et al., "Implementation of a Least Mean Square Approach for a Low-Cost Short Baseline Attitude Determination", Proceedings of ION GNSS 2007, pages 818-826 (XP056010162) discloses a further approach to baseline-constrained attitude estimation using GNSS sensors with a baseline of the order of 1 meter.

EP3190430A1 discloses a vehicle attitude determination method, in which candidate attitude values from GNSS are evaluated as to their compatibility with a heading read from an inertial instrument (INS) and a known baseline distance.

US6256583B1 discloses an attitude determination method, in which the precise attitude determination is guided by a known baseline distance. Optionally the attitude is determined in view of a heading computed from a code measurement of a GPS signal. Because no phase calibration is performed in a code measurement, it may include an error of up to one symbol duration; this is less accurate than the regular use of the GPS signal.

SUMMARY

An object of the invention is to provide a method for estimating the attitude of a vehicle, which provides an accurate vehicle attitude.

The object is achieved by a method according to claim 1.

Thus, a method is proposed, wherein a vehicle having two antennas is used to estimate the attitude of said vehicle, in particular by using a relative position vector and said separation of said antennas.

By placing two global navigation satellite system antennas, and in particular two global navigation satellite system receivers, on said vehicle providing raw satellite observables, it is possible to apply real time kinematic (RTK) algorithms to find the relative position of the antennas enabling to calculate the attitude of said vehicle. Moreover, as long as the real time kinematic integer ambiguity fix for said antennas is known, it is possible to calculate the fix, even when the truck is stationary.

An advantage of the provided method is to calculate the attitude of a vehicle in situations where it would not be possible with known global navigation satellite system receivers, in particular by utilizing two antennas, e.g. two global navigation satellite system antennas on said vehicle.

When said vehicle is moving and not turning, e.g. the yaw rate of said vehicle equals zero, the attitude of said vehicle is equal to the direction of movement of said antennas (GNSS heading). Knowing this and the separation of said antennas, the integer ambiguity fix may be calculated. Once a possible candidate is evaluated, said candidate may validated by analysing the residuals of said relative position calculation. For example, by the following steps: 1) Is said vehicle moving at high enough speed to provide accurate GNSS heading? 2) Is said vehicle currently not turning (yaw rate = 0)? 3) Calculate said relative position of said antennas using current GNSS heading and the known separation of the antennas. Additionally, use roll estimate if available or assume roll is zero. 4) Calculate said integer ambiguities for RTK fix based on relative position estimation. 5) Calculate said relative position using the ambiguity candidates and validate the solution using the residuals. 6) Validate the solution using know properties (residuals, separation, roll, GNSS heading, etc.).

In a preferred embodiment, the step of detecting that said vehicle is moving and not turning comprises the step of: estimating the movement speed of said vehicle.

Preferably, the movement speed is estimated via vehicle sensors, e.g. by at least one wheel speed sensor.

In a preferred embodiment, the step of detecting that said vehicle is moving and not turning also comprises the step of: estimating the yaw rate of said vehicle.

Thus, the yaw rate is used to determine whether said vehicle is turning or not.

In a preferred embodiment, the method further comprises the step of: storing the integer ambiguity fix, in particular for the antennas.

Preferably, the data is stored in a memory or a memory device. Preferably, the stored data comprises at least the real time kinematic integer ambiguity fix.

In particular, said integer ambiguity fix is stored to be used while the fix is valid, preferably until the phase-lock is lost. Thus, said integer ambiguity is preferably not stored to a persistent memory.

Thus, the proposed method may also be used while said vehicle is stationary, in particular by using said stored data.

In a more preferred embodiment, the attitude of said vehicle is estimated while said vehicle is stationary, in particular by using said stored integer ambiguity fix.

In a further embodiment, the method also comprises the step of: defining a search space for possible candidates values of the attitude and evaluating all possible candidate within in the search space with respect to the relative position vector.

Preferably, the search space for possible candidates is defined based on the uncertainty of the GNSS heading, which in turn is based on the number of satellites, vehicle speed and yaw rate.

The GNSS heading is then used together with the known antenna separation to estimate a relative position uncertainty.

The relative position uncertainty can then be used to, for each, satellite define the potential ambiguity factors to be included in the search space.

Thus, the proposed method evaluates not one but all possible candidates within said search space, in particular defined by an estimated uncertainty.

In particular, there are factors which could influence the possibility of finding the correct fix, including not knowing the roll of said vehicle or inaccuracies in the yaw rate information, e.g. by sensor errors. Defining a search space, however, may overcome this.

According to a second aspect of the invention, the object is achieved by a computer program comprising program according to claim 11.

According to a third aspect of the invention, the object is achieved by a computer readable medium according to claim 12.

According to a fourth aspect of the invention, the object is achieved by an estimation unit according to claim 10.

According to a fifth aspect of the invention, the object is achieved by a movement estimation device according to claim 13.

According to a sixth aspect of the invention, the object is achieved by a vehicle comprising an above or below described movement estimation device.

In one embodiment, said vehicle further comprises at least a first antenna and a second antenna for communicating with a global navigation satellite system, in particular to provide raw satellite observables.

In a preferred embodiment, said vehicle also comprises at least a first receiver and a second corresponding receiver for communicating with the global navigation satellite system.

In a more preferred embodiment, said vehicle also comprises at least one movement speed estimation unit having at least one movement speed sensor. Preferably, said vehicle also comprises at least one yaw rate estimation unit.

Hence, said vehicle comprises at least one sensor obtaining that said vehicle is moving and not turning.

BRIEF DESCRIPTION OF THE DRAWINGS

With reference to the appended drawings, below follows a more detailed description of embodiments of the invention cited as examples.

In the drawings:

Fig. 1 shows a vehicle having two antennas interacting with a global navigation satellite system in order to estimate the attitude of said vehicle,

Fig. 2 shows a vehicle having two antennas in a topview,

Fig. 3 shows an embodiment of a method according to the invention, and

Fig. 4 shows a preferred embodiment of a method according to the invention.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

DETAILED DESCRIPTION OF EXAMPLE EMBODIMENTS OF THE INVENTION

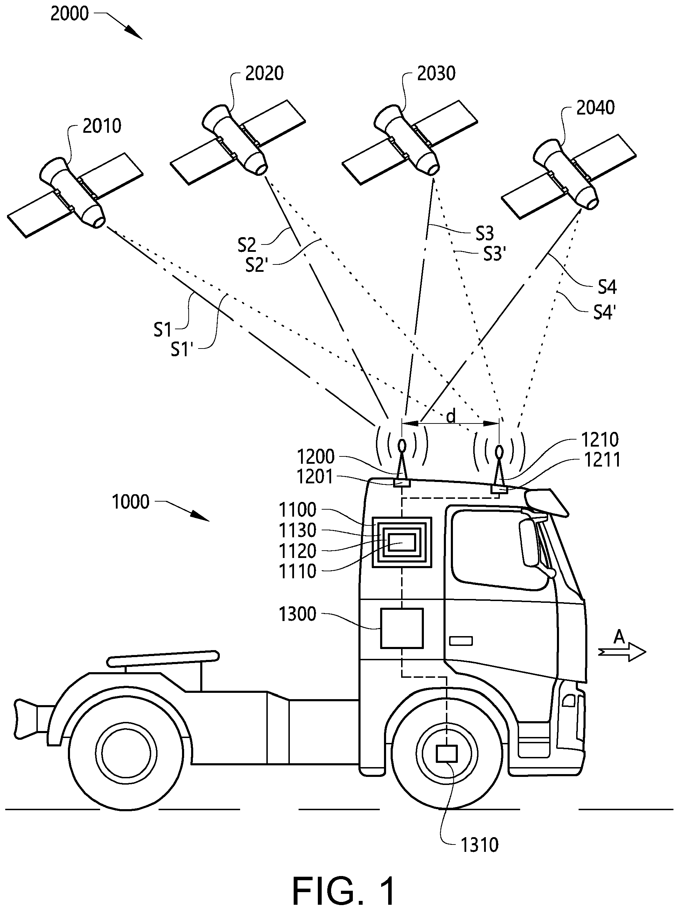

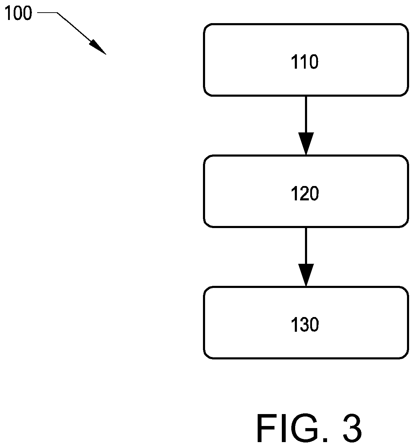

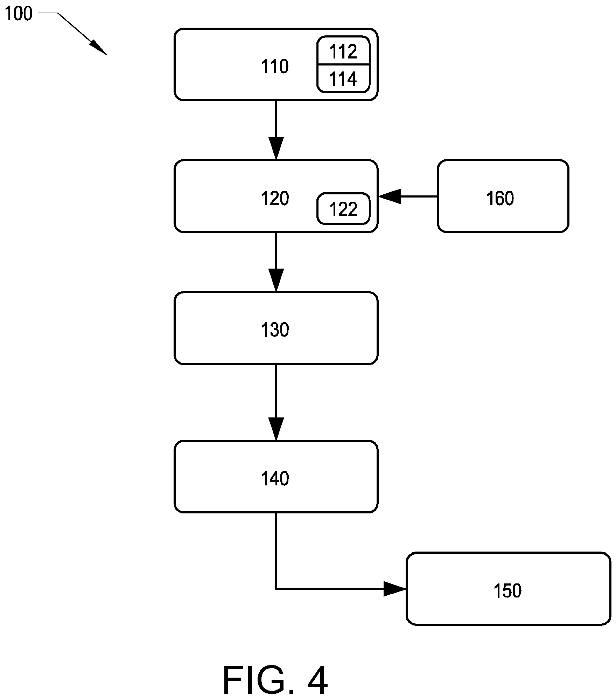

Fig. 1 shows a vehicle 1000, in particular a truck, having an attitude A and interacting with a global navigation satellite system 2000 via a first and a second antenna 1200, 1210 in order to obtain said attitude A of said vehicle 1000.
Hence, said vehicle comprises at least a first antenna 1200 and a second antenna 1210 having a separation d to each other for communicating with the global navigation satellite system 2000. In a preferred embodiment, said vehicle 1000 also comprises two receivers for communicating with the global navigation satellite system 2000.
Moreover, said vehicle 1000 also comprises a movement estimation device 1100 and a movement speed estimation unit 1300.
Said movement estimation device 1100 comprises a computer program 1110, a computer readable medium 1120 and an estimation unit 1130.
Said movement estimation device 1100 is further adapted for performing said above or below described method 100 for estimating the attitude A of said vehicle 1000.
In particular, said movement estimation device 1100 is connected to said antennas 1200, 1210 and said movement speed estimation unit 1300.
Preferably, said antennas 1200, 1210 are installed at the roof of said vehicle 1000 and the movement speed estimation unit 1300 comprises a movement speed sensor 1310, which is arranged for estimating the angular velocity of at least one wheel of said vehicle 1000.
Said global navigation satellite system 2000 comprises at least a plurality of satellites 2010, 2020, 2030, 2040 interacting with said antennas 1200, 1210 of said vehicle 1000, in particular via the signals $S_1$, $S_1'$, $S_2$; $S_2'$, $S_3$, $S_3'$, $S_4$, $S_4'$.
Thus, said vehicle 1000 is adapted for double difference via said antennas 1200, 1210.
One way of estimating said attitude A of said vehicle 1000 is proposed in Fig. 3 and/or Fig. 4.

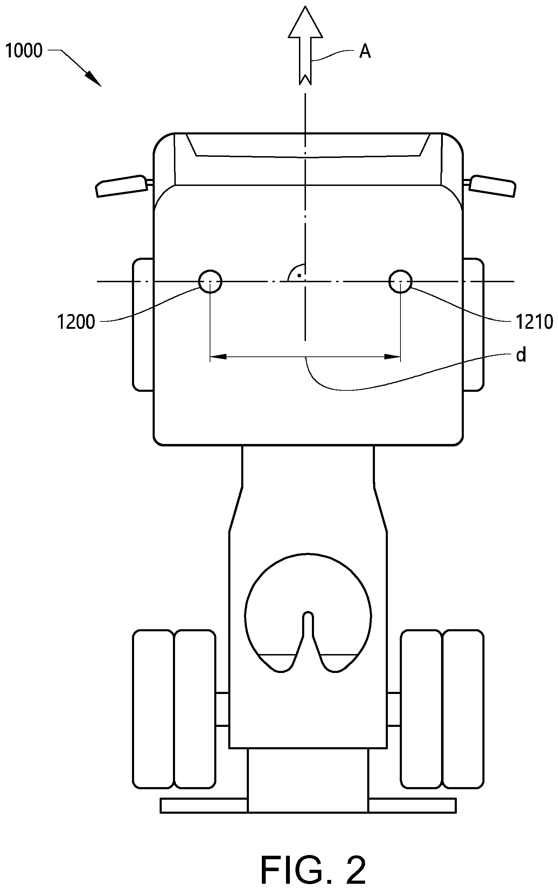

Fig. 2 shows a vehicle 1000 having two antennas 1200, 1210 in a topview, in particular the topview of said vehicle 1000 in Fig. 1.
Said vehicle 1000 has an attitude A and said antennas 1200, 1210 are mounted at the roof at said vehicle 1000, having a separation d to each other. Preferably, said antennas 1200, 1210 are installed at said roof such that said separation d is square to said attitude A.
Fig. 3 shows an embodiment of a method 100 for estimating the attitude of a vehicle, preferably a truck as shown in Fig. 1 and/or Fig. 2.
The method 100 comprises the steps of: detecting that said vehicle is moving and not turning 110; calculating an integer ambiguity fix 120; and validating the integer ambiguity fix 130.
In a first step 110, the movement of said vehicle is detected and also whether said vehicle is turning or not. If said vehicle is not turning and the movement speed of said vehicle is high enough to provide accurate GNSS heading, a second step is started.
In the second step 120, an integer ambiguity fix is calculated, in particular by using a relative position calculation and the separation of said first and second antenna, in particular the separation of said antennas of said vehicle as shown in Fig. 1 and/or Fig. 2.
In a third step 130, the integer ambiguity fix is validated, in particular by analysing the residuals of the relative position calculation, as mentioned in said second step 120.
With continued reference to Fig. 3, there will be described an alternative embodiment of a method 100 for estimating the attitude of a vehicle, preferably a truck as shown in Fig. 1 and/or Fig. 2.
The method 100 comprises the steps of: detecting that said vehicle is moving and not turning and obtaining a heading of at least one of the antennas 110; calculating an integer ambiguity fix corresponding to the relative position vector of the first and second antenna 120; and determining the attitude of the vehicle using the integer ambiguity fix 130.

In a first step 110, the movement of said vehicle is detected and also whether said vehicle is turning or not. If said vehicle is not turning and the movement speed of said vehicle is high enough to provide an accurate GNSS heading, a heading $v$ is obtained for at least one of the antennas. (Clearly, the GNSS heading may be an approximation of the attitude A of the vehicle. To estimate the attitude A with improved accuracy, however, this method 100 uses the GNSS heading as one of several inputs.) Then a second step is initiated.

In the second step 120, the relative position vector D is estimated which satisfies $r_{1210} = r_{1200} + D$, where $r_{1200}$, $r_{1210}$ are position vectors of the first and second antennas 1200, 1210. An estimate $D^*$ of the relative position vector $D$ will be used to derive an integer ambiguity fix.

In the third step 130, the attitude A of the vehicle is determined, wherein candidate values of the attitude obtained from the GNSS are validated by analysing residuals in respect of the estimated relative position vector estimate D*, which is applied to find the integer ambiguity fix. The estimate D* corresponds to the number of wavelengths, per GNSS satellite 2010, 2020, 2030, 2040, by which a carrier phase measurement is to be corrected in a double-differenced comparison of data received at the first and second antennas 1200, 1210. The correction may be termed integer ambiguity fix.

The integer ambiguity estimation may include solving a constrained optimization problem, as in P. Teunissen, "The least-squares ambiguity decorrelation adjustment: a method for fast GPS integer ambiguity estimation", Journal of Geodesy, 70, 65-82, 1995.

The validation may alternatively apply a LAMBDA method, as in above-cited XP056006728 or XP056010162. The ratio test disclosed therein may include applying a threshold, with which the calculated ratio of integer residuals is compared. The threshold may be a number which depends on the expected noisiness of the carrier phase measurements. Alternatively or additionally, it may be required that the threshold be satisfied for several consecutive samples, such as 3-5 samples.

In particular, the third step 130 may comprise minimizing an objective function over $\mathbb{Z}^3$ the space of integer triplets, wherein the objective function includes a term expressing the difference between D*, the estimate of the relative position vector on the basis of the GNSS heading, and $\hat{D}$, a float estimate of the relative position vector computed from GNSS position vector candidates representing the first and second antennas 1200, 1210. Such an objective function will penalize any GNSS position vector candidates that are incompatible with the estimate of the relative position vector based on the GNSS heading. Conversely, the objective function will tend to validate position vector candidates that are in good agreement with **D***. The validated position vector candidates are generally a useful basis for determining the attitude A of the vehicle.

Alternatively, the third step 130 can be implemented by modifying the method disclosed in S. M. Martin, GPS carrier phase tracking in difficult environments using vector tracking for precise positioning and vehicle attitude estimation, doctoral dissertation, Auburn University, 2017, in which a Kalman filter is used to estimate low-precision floating-point estimates of the carrier ambiguities. In the Kalman filter, according to this reference, the floating-point estimates are improved by including a measurement with low uncertainty of the *distance* between two antennas; a residual of this distance (baseline residual) is appended to the measurement vector of the Kalman filter, as one new component. The present invention makes available an estimate **D*** of the relative position *vector* between the two antennas 1200, 1210, so that three new components can be added to the measurement vector of the Kalman filter; this may improve the accuracy of Martin's method significantly.

The present approach is efficient at least when the GNSS heading has better accuracy than the GNSS position vector candidates. This condition is satisfied in a broad range of situations, since the GNSS heading is computed from a plurality of GNSS measurements. Therefore, the GNSS heading can be obtained using a state-of-the-art method, e.g., by reading an output from a commercially available GNSS receiver during uniform movement of the vehicle 1000.

Concerning the second step 120, the following is a possible approach to determine **D***, the estimate of the relative position vector on the basis of the GNSS heading v. The true relative position vector **D** satisfies:

$$|\boldsymbol{D}| = d \tag{1}$$

$$\boldsymbol{D} \perp \boldsymbol{e}_z \tag{2}$$

$$\boldsymbol{D} \perp \boldsymbol{v} \tag{3}$$

where $\boldsymbol{e_z}$ denotes a basis vector of a local east-north-up (ENU) reference frame. Condition (1) expresses the known separation distance. Condition (2) holds for zero roll when the antennas are at equal height, but regardless of the pitch of the vehicle. Condition (3) holds when the separation is square to the attitude A and the vehicle is not turning. An estimate satisfying conditions (1), (2) and (3) is:

$$D^* = \frac{d}{|v \times e_z|} v \times e_z,$$

where $\times$ denotes vector product. This estimate may be applied to find an integer ambiguity fix for determining the attitude A.

Here, it has been assumed that one GNSS heading is used, from either the first or second antenna 1200, 1210. In variations of the method, two GNSS headings $v_1$, $v_2$ may be used to find the integer ambiguity fix. For example, an average $v = \frac{1}{2}(v_1 + v_2)$ of the two GNSS headings may be used to compute $D^*$. Alternatively, two separate estimates $D_1^*, D_2^*$ are computed on the basis of a respective GNSS heading $v_1$, $v_2$, and an average of both, $D^* = \frac{1}{2}(D_1^* + D_2^*)$, is fed into the third step 130. Further alternatively, the two separate estimates $D_1^*, D_2^*$ are computed and differences with respect to each estimate are included in the objective function.

A generalized version of the method 100 can be performed also in situations where condition (3) does not apply. If the first and second antennas 1200, 1210 are mounted such that the true relative position vector $D$ differs by an angle $\alpha$ with respect to the lateral direction of the vehicle, then $D^*$ according to the above equation is to be rotated back, namely, by an angle $-\alpha$ with respect to $e_z$. This is accounted for by the following expression for $D^*$ in the ENU reference frame:

$$D^* = \frac{d}{|v \times e_z|} \begin{bmatrix} \cos\alpha & \sin\alpha & 0 \\ -\sin\alpha & \cos\alpha & 0 \\ 0 & 0 & 1 \end{bmatrix} v \times e_z.$$

The first, simplified expression for $D^*$ corresponds to the special case $\alpha = 0$.

The carrier ambiguities remain constant as long as the GNSS receiver maintains phase lock; the integer ambiguity fix is valid for this duration. Therefore, the method 100 may comprise an additional step of storing the integer ambiguity fix, which is available after the third step 130, in a memory. The stored data may be used in order to estimate the attitude A later, even after the vehicle 1000 has moved to a different position and/or orientation. This way, the later attitude estimation can be performed while no fresh GNSS heading is available, as may be the case during slow driving, much manoeuvring, reversing or when the vehicle 1000 is stationary. The stored integer ambiguity fix may be retrieved and used for the purpose of estimating the attitude A in each of these situations.

Fig. 4 shows a preferred embodiment of a method 100 for estimating the attitude of a vehicle, preferably a truck as shown in Fig. 1 and/or Fig. 2.

The method 100 comprises the steps of: detecting that said vehicle is moving and not turning 110; calculating an integer ambiguity fix 120 and validating the integer ambiguity fix 130.

In a first step, the movement of said vehicle is detected and also whether said vehicle is turning or not. If said vehicle is not turning and the movement speed of said vehicle is high enough to provide accurate GNSS heading, a second step is started.

The first step also comprises: estimating the movement speed of said vehicle (112) and estimating the yaw rate of said vehicle (114).

In the second step 120, an integer ambiguity fix is calculated, in particular by using a relative position calculation and the separation of said first and second antenna, in particular the separation of said antennas of said vehicle as shown in Fig. 1 and/or Fig. 2.

The second step also comprises a calculation wherein at least the relative position of said antennas (1200, 1210) is calculated and/or estimated. For this, a search space may be defined (160) in order to obtain multiple possible candidates of the integer ambiguity fix. Preferably, the step also comprises: evaluating all possible candidates within the search space.

In a third step 130, the integer ambiguity fix is validated, in particular by analysing the residuals of the relative position calculation, as mentioned in said second step 120.

Afterwards, in a fourth step 140, the validated integer ambiguity fix may be stored in a memory.

The stored data may then be used in a fifth step 150, wherein the attitude of said vehicle is estimated, even when said vehicle is stationary, in particular by using said stored validated integer ambiguity fix.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A method (100) for estimating the attitude (A) of a vehicle (1000) by using a global navigation satellite system, GNSS, (2000) having a plurality of satellites (2010, 2020, 2030, 2040), wherein the vehicle comprises at least a first antenna (1200) and a second antenna (1210) having a separation (d) to each other, **characterized by** the steps of:

   - detecting that said vehicle is moving and not turning (110) and obtaining a heading of at least one of the antennas using the GNSS, wherein the heading is obtained as a GNSS heading corresponding to the direction of movement of the antennas computed from a plurality of GNSS measurements during uniform movement of the vehicle at a speed high enough for the GNSS heading to be accurate;
   - calculating an integer ambiguity fix (120) corresponding to the relative position vector between the first and second antenna using said heading and the separation (d) of said first and second antenna (1200, 1210);
   - determining the attitude of the vehicle (130), including validating candidate values of the attitude obtained from GNSS carrier phase measurements from the GNSS by analysing residuals in respect of the relative position vector, thereby validating the calculated integer fix.

2. A method (100) according to claim 1, wherein said determining the attitude of the vehicle (130) includes analysing integer residuals.

3. A method (100) according to claim 2, wherein said determining the attitude of the vehicle (130) includes applying a threshold which is dependent on expected noisiness of measurements.

4. A method (100) according to claim 3, wherein said determining the attitude of the vehicle (130) includes requiring that the threshold be met for a number of consecutive samples.

5. A method (100) according to any of the preceding claims, wherein

   - detecting that said vehicle is moving and not turning (110) comprises the step of:

      - estimating the movement speed of said vehicle (112).

6. A method (100) according to any of the preceding claims, wherein

   - detecting that said vehicle is moving and not turning comprises (110) the step of:

      - estimating the yaw rate of said vehicle (114).

7. A method (100) according to any of the preceding claims, further comprising the step of:

      - storing the calculated integer ambiguity fix (140).

8. A method (100) according to claim 7, further comprising the step of:

      - estimating the attitude (A) of said vehicle (150), while said vehicle is stationary, by using said stored calculated integer ambiguity fix.

9. A method (100) according to one of the preceding claims, further comprising the step of:

      - defining a search space (160) for possible candidate values of the attitude and evaluating all possible candidate within the search space with respect to the relative position vector.

10. An estimation unit (1130) for estimating the attitude (A) of a vehicle, the estimation unit configured to perform the steps of the method according to any of claims 1 - 9.

11. A computer program (1110) comprising program code means for causing the estimation unit (1130) of claim 10 to perform the steps of any of claims 1 - 9.

12. A computer readable medium (1120) carrying a computer program comprising program code means for causing the estimation unit (1130) of claim 10 to perform the steps of any of claims 1 - 9.

13. A movement estimation device (1100) for a vehicle, **characterized in that** the movement estimation device comprises optionally a computer and at least one of:

- a computer program (1110) according to claim 11,
- a computer readable medium (1120) according to claim 12,
- an estimation unit (1130) according to claim 10.

14. A vehicle (1000) comprising a movement estimation device (1100) according to claim 13.

15. A vehicle (1000) according to claim 14, further comprising at least a first antenna (1200) and a second antenna (1210) for communicating with a global navigation satellite system (2000), in particular to provide raw satellite observables.

16. A vehicle (1000) according to claim 14 or 15, further comprising at least one movement speed estimation unit (1300) having at least one movement speed sensor (1310).

**Patentansprüche**

1. Verfahren (100) zur Schätzung der Lage (A) eines Fahrzeugs (1000) unter Verwendung eines globalen Navigationssatellitensystems, GNSS, (2000) mit mehreren Satelliten (2010, 2020, 2030, 2040), wobei das Fahrzeug mindestens eine erste Antenne (1200) und eine zweite Antenne (1210) mit einem Abstand (d) zueinander umfasst, **gekennzeichnet durch** die folgenden Schritte:

- Erfassen, dass sich das Fahrzeug bewegt und nicht wendet (110), und Erhalten eines Kurses von mindestens einer der Antennen unter Verwendung des GNSS, wobei der Kurs als ein GNSS-Kurs erhalten wird, der der Bewegungsrichtung der Antennen entspricht, die mehreren GNSS-Messungen während einer gleichmäßigen Bewegung des Fahrzeugs mit einer Geschwindigkeit berechnet wird, die hoch genug ist, damit der GNSS-Kurs genau ist;
- Berechnen eines ganzzahligen Mehrdeutigkeitsfixpunktes (120), der dem relativen Positionsvektor zwischen der ersten und der zweiten Antenne entspricht, unter Verwendung des Kurses und des Abstandes (d) der ersten und der zweiten Antenne (1200, 1210);
- Bestimmen der Lage des Fahrzeugs (130), einschließlich des Validierens von Kandidatenwerten der Lage, die aus GNSS-Trägerphasenmessungen vom GNSS erhalten wurden, durch Analysieren von Residuen in Bezug auf den relativen Positionsvektor, wodurch der berechnete ganzzahlige Fixpunkt validiert wird.

2. Verfahren (100) nach Anspruch 1, wobei das Bestimmen der Lage des Fahrzeugs (130) die Analyse ganzzahliger Residuen umfasst.

3. Verfahren (100) nach Anspruch 2, wobei das Bestimmen der Lage des Fahrzeugs (130) die Anwendung eines Schwellenwerts umfasst, der von der erwarteten Geräuschentwicklung der Messungen abhängt.

4. Verfahren (100) nach Anspruch 3, wobei das Bestimmen der Lage des Fahrzeugs (130) das Erfordernis umfasst, dass der Schwellenwert für eine Vielzahl von aufeinanderfolgenden Abtastungen erfüllt wird.

5. Verfahren (100) nach einem der vorhergehenden Ansprüche, wobei

- Erfassen, dass sich das Fahrzeug bewegt und nicht wendet (110), folgenden Schritt umfasst:

- Schätzen der Bewegungsgeschwindigkeit des Fahrzeugs (112) .

6. Verfahren (100) nach einem der vorhergehenden Ansprüche, wobei

- Erfassen, dass sich das Fahrzeug bewegt und nicht wendet (110), folgenden Schritt umfasst:

- Schätzen der Gierrate des Fahrzeugs (114).

7. Verfahren (100) nach einem der vorhergehenden Ansprüche, das ferner folgenden Schritt umfasst:

   - Speichern des berechneten ganzzahligen Mehrdeutigkeitsfixpunktes (140).

8. Verfahren (100) nach Anspruch 7, das ferner folgenden Schritt umfasst:

   - Schätzen der Lage (A) des Fahrzeugs (150), während das Fahrzeug stationär ist, unter Verwendung des gespeicherten berechneten ganzzahligen Mehrdeutigkeitsfixpunktes.

9. Verfahren (100) nach einem der vorhergehenden Ansprüche, das ferner folgenden Schritt umfasst:

   - Definieren eines Suchraums (160) für mögliche Kandidatenwerte der Lage und Auswerten aller möglichen Kandidaten innerhalb des Suchraums in Bezug auf den relativen Positionsvektor.

10. Schätzeinheit (1130) zur Schätzung der Lage (A) eines Fahrzeugs, wobei die Schätzeinheit konfiguriert ist, um die Schritte des Verfahrens nach einem der Ansprüche 1 - 9 durchzuführen.

11. Computerprogramm (1110), das Programmcodemittel umfasst, um die Schätzeinheit (1130) nach Anspruch 10 zu veranlassen, die Schritte nach einem der Ansprüche 1 - 9 durchzuführen.

12. Computerlesbares Medium (1120), das ein Computerprogramm enthält, das Programmcodemittel umfasst, um die Schätzeinheit (1130) nach Anspruch 10 zu veranlassen, die Schritte nach einem der Ansprüche 1 - 9 durchzuführen.

13. Bewegungsschätzvorrichtung (1100) für ein Fahrzeug, **dadurch gekennzeichnet, dass** die Bewegungsschätzvorrichtung optional einen Computer und mindestens eines der folgenden Elemente umfasst:

   - ein Computerprogramm (1110) nach Anspruch 11,
   - ein computerlesbares Medium (1120) nach Anspruch 12,
   - eine Schätzeinheit (1130) nach Anspruch 10.

14. Fahrzeug (1000) umfassend eine Bewegungsschätzvorrichtung (1100) nach Anspruch 13.

15. Fahrzeug (1000) nach Anspruch 14, ferner umfassend mindestens eine erste Antenne (1200) und eine zweite Antenne (1210) zur Kommunikation mit einem globalen Navigationssatellitensystem (2000), insbesondere zur Bereitstellung von ungereinigten Satelliten-Observablen.

16. Fahrzeug (1000) nach Anspruch 14 oder 15, ferner umfassend mindestens eine Bewegungsgeschwindigkeitsschätzeinheit (1300) mit mindestens einem Bewegungsgeschwindigkeitssensor (1310).

**Revendications**

1. Procédé (100) pour estimer l'attitude (A) d'un véhicule (1000) en utilisant un système global de navigation par satellite, GNSS (2000) ayant une pluralité de satellites (2010, 2020, 2030, 2040), dans lequel le véhicule comprend au moins une première antenne (1200) et une seconde antenne (1210) ayant chacune une séparation (d) entre elles, **caractérisé par** les étapes consistant à :

   - détecter que ledit véhicule se déplace et ne tourne pas (110) et obtenir un cap d'au moins une des antennes à l'aide du GNSS, le cap étant obtenu comme cap GNSS correspondant à la direction de déplacement des antennes calculée à partir d'une pluralité de mesures GNSS lors d'un déplacement uniforme du véhicule à une vitesse suffisamment élevée pour que le cap GNSS soit précis ;
   - calculer un correctif d'ambiguïté entier (120) correspondant au vecteur de position relative entre les première et seconde antennes en utilisant ledit cap et la séparation (d) desdites première et seconde antennes (1200, 1210) ;
   - déterminer l'attitude du véhicule (130), y compris la validation des valeurs candidates de l'attitude obtenues à partir des mesures de phase porteuse du GNSS à partir du GNSS, par analyse des résiduels par rapport au vecteur de position relative, en validant ainsi le correctif complet calculé.

2. Procédé (100) selon la revendication 1, dans lequel ladite détermination de l'attitude du véhicule (130) comprend l'analyse de résiduels entiers.

3. Procédé (100) selon la revendication 2, dans lequel ladite détermination de l'attitude du véhicule (130) comprend l'application d'un seuil qui dépend du caractère bruyant attendu des mesures.

4. Procédé (100) selon la revendication 3, dans lequel ladite détermination de l'attitude du véhicule (130) comprend l'exigence que le seuil soit atteint pour un certain nombre d'échantillons consécutifs.

5. Procédé (100) selon l'une quelconque des revendications précédentes, dans lequel

  - la détection que ledit véhicule se déplace et ne tourne pas (110) comprend l'étape consistant à :

    - estimer la vitesse de déplacement dudit véhicule (112) .

6. Procédé (100) selon l'une quelconque des revendications précédentes, dans lequel

  - la détection que ledit véhicule se déplace et ne tourne pas comprend (110) l'étape consistant à :

    - estimer la vitesse de lacet dudit véhicule (114).

7. Procédé (100) selon l'une quelconque des revendications précédentes, comprenant en outre l'étape consistant à :

  - stocker le correctif d'ambiguïté complet calculé (140) .

8. Procédé (100) selon la revendication 7, comprenant en outre l'étape consistant à :

  - estimer l'attitude (A) dudit véhicule (150), lorsque ledit véhicule est à l'arrêt, en utilisant ledit correctif d'ambiguïté calculé stocké.

9. Procédé (100) selon l'une des revendications précédentes, comprenant en outre l'étape consistant à :

  - définir un espace de recherche (160) pour les valeurs candidates possibles de l'attitude et évaluer tous les candidats possibles dans l'espace de recherche par rapport au vecteur de position relative.

10. Unité d'estimation (1130) pour estimer l'attitude (A) d'un véhicule, l'unité d'estimation étant configurée pour exécuter les étapes du procédé selon l'une quelconque des revendications 1 à 9.

11. Programme informatique (1110) comprenant un moyen de code de programme pour amener l'unité d'estimation (1130) selon la revendication 10 à exécuter les étapes de l'une quelconque des revendications 1 à 9.

12. Support lisible par ordinateur (1120) comportant un programme informatique comprenant un moyen de code de programme pour amener l'unité d'estimation (1130) selon la revendication 10 à exécuter les étapes de l'une quelconque des revendications 1 à 9.

13. Dispositif d'estimation de mouvement (1100) pour un véhicule, **caractérisé en ce que** le dispositif d'estimation de mouvement comprend facultativement un ordinateur et au moins l'un des éléments suivants :

    - un programme informatique (1110) selon la revendication 11,
    - un support lisible par ordinateur (1120) selon la revendication 12,
    - une unité d'estimation (1130) selon la revendication 10.

14. Véhicule (1000) comprenant un dispositif d'estimation de mouvement (1100) selon la revendication 13.

15. Véhicule (1000) selon la revendication 14, comprenant en outre au moins une première antenne (1200) et une seconde antenne (1210) pour communiquer avec un système global de navigation par satellite (2000), en particulier pour fournir des observables bruts par satellite.

16. Véhicule (1000) selon la revendication 14 ou 15, comprenant en outre au moins une unité d'estimation de vitesse de déplacement (1300) ayant au moins un capteur de vitesse de déplacement (1310).

FIG. 1

FIG. 2

100

FIG. 3

100

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3190430 A1

- US 6256583 B1

**Non-patent literature cited in the description**

- **J. PINCHIN et al.** Precise Kinematic Positioning Using Single Frequency GPS Receivers and an Integer Ambiguity Constraint. *Proceedings of IEEE/ION PLANS*, 2008, 600-605
- **N. PARIKH et al.** Implementation of a Least Mean Square Approach for a Low-Cost Short Baseline Attitude Determination. *Proceedings of ION GNSS*, 2007, 818-826

- **P. TEUNISSEN**. The least-squares ambiguity decorrelation adjustment: a method for fast GPS integer ambiguity estimation. *Journal of Geodesy*, 1995, vol. 70, 65-82
- GPS carrier phase tracking in difficult environments using vector tracking for precise positioning and vehicle attitude estimation. **S. M. MARTIN**. doctoral dissertation. Auburn University, 2017